# EUROPÄISCHE PATENTANMELDUNG

(11) **EP 0 582 149 A1**
(43) Veröffentlichungstag der Anmeldung: **09.02.1994**
(21) Anmeldenummer: 93111818.6
(22) Anmeldetag: 23.07.1993
(51) Int. Cl.: B62H 3/10

(54) **Abschliessvorrichtung für Zweiradfahrzeuge**

(30) Priorität: 03.08.1992 CH 2433/92
(71) Anmelder: B & B Trading & Consulting AG, CH-8852 Altendorf (CH)
(72) Erfinder: Bürge, Kuno, CH-8854 Galgenen (CH)
(74) Vertreter: Blum, Rudolf Emil Ernst

(57) **Zusammenfassung**

Der Rahmen (2) des Zweiradfahrzeuges wird mit einer Bride (3) versehen, die ein Lagerauge (4) aufweist. Ein Ständer (1) wird ortsfest montiert. Das Lagerauge (4) und der Ständer (1) weisen Bohrungen (8, 10) auf, die zueinander ausgerichtet werden können, worauf ein Schloss (17, 17) in die fluchtenden Bohrungen (8, 10) eingesetzt werden kann zum Verriegeln von Bride (3) und Ständer (1).

## Beschreibung

Die Erfindung betrifft eine Abschliessvorrichtung für Zweirad-Fahrzeuge.

Bekannt sind Abschliessvorrichtungen, die am Fahrzeugrahmen befestigt sind und mit einem Riegel in die Speichen eingreifen. Weiterhin sind aus einer Kette oder Stahlseil bestehende Schlaufen bekannt, die mittels eines Schlosses zu einem ovalen Ring geschlossen werden können, wobei die Schlaufe selbst wiederum durch die Radspeichen und Rahmenteile geführt werden kann, mit zusätzlicher Umschlingung eines ortsfesten Gegenstandes. Die bekannten Abschliessvorrichtungen haben verschiedene Nachteile. Umschliesst die Abschliessvorrichtung nur die Räder und Rahmenteile, so kann entweder ein Rad entfernt werden oder das ganze Zweiradfahrzeug kann entwendet werden. Umgibt die Abschliessvorrichtung mittels Kette oder Stahlseil noch zusätzlich einen ortsfesten Gegenstand, so könnte die Kette oder das Stahlseil mittels geeignetem Werkzeug zerschnitten werden. Am besten haben sich Langbügel-Schlösser bewährt, die einen Rahmenteil und einen ortsfesten Gegenstand umschlingen. Es wird die Schaffung einer Abschliessvorrichtung bezweckt, die ebenso zuverlässig wirkt, zusätzlich aber auch noch eine Abstellvorrichtung für das zweirad-Fahrzeug bietet, also zusätzlich noch die Funktion eines Zweirad-Ständers hat und somit dem Zweirad-Fahrzeug einen festen Halt gegen ein Umfallen bietet.

Die erfindungsgemässe Abschliessvorrichtung ist gekennzeichnet durch einen ortsfest zu montierenden Ständer und eine am Rahmen des Zweirad-Fahrzeuges zu befestigen bestimmte Bride mit Lagerauge zum gegenseitigen Ineinanderfügen von Ständer und Lagerauge, wobei der Ständer und das Lagerauge je mit Bohrungen versehen sind, die im zusammengefügten Zustand miteinander fluchten, zum Einsetzen eines Schlosses.

In der Zeichnung ist ein Ausführungsbeispiel des Erfindungsgegenstandes mit zwei Ausführungsformen eines Schlosses dargestellt. Es zeigen:
Figur 1 die erfindungsgemässe Abschliessvorrichtung im geöffneten Zustand, mit einer ersten Ausführungsform eines Schlosses, und
Figur 2 die in Figur 1 gezeigte Abschliessvorrichtung im geschlossenen Zustand, mit einer zweiten Ausführungsform des Schlosses.

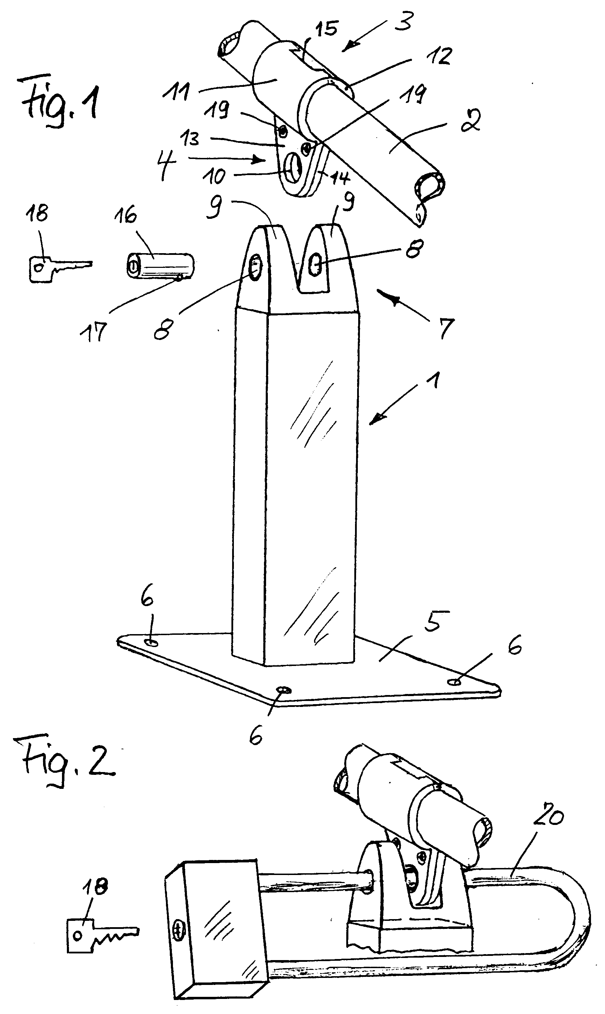

Die Abschliessvorrichtung hat einen ortsfest zu montierenden Ständer 1 und eine am Rahmen 2 eines Zweirad-Fahrzeuges zu befestigen bestimmte Bride 3 mit Lagerauge 4 zum gegenseitigen Ineinanderfügen von Ständer 1 und Lagerauge 4. Der Ständer 1 weist unten eine Bodenplatte 5 mit Befestigungsorganen 6 und oben einen Gabelkopf 7 mit zueinander fluchtenden Bohrungen 8 in seinen gegabelten Schenkeln 9 auf. Die Schenkel 9 sind dazu bestimmt, das Lagerauge 4 der Bride 3 so zwischen sich aufzunehmen, dass die Bohrung 10 des Lagerauges mit den Bohrungen 8 des Gabelkopfes 7 fluchtet. Beim Beispiel nach Figur 1 sind die Befestigungsorgane 6 der Bodenplatte 5 als Bohrungen ausgebildet, durch die nicht dargestellte Bodenschrauben in ein darunter befindliches Fundament ragen.

Die Bride 3 umfasst zwei Halbschalen 11 und 12 mit daran vorhandenen Lageraugenteilen 13 und 14, die zusammen die Bohrung 10 aufweisen. Die zwei Halbschalen 11 und 12 sind mittels eines Gelenkes 15 miteinander verbunden und hintergreifen einander formschlüssig durch dieses Gelenk 15.

Die Bohrungen 8 im Gabelkopf 7 können als Durchgangsbohrungen ausgebildet sein. Beim Beispiel nach Figur 1 sind die Bohrungen 8 im Gabelkopf 7 zum Einsetzen eines Schlosszylinders 16 ausgebildet, wobei dieser Schlosszylinder 16 in bekannter Weise mit einem radial ausfahrbaren Hintergreiforgan 17 versehen ist, das durch einen Schlüssel 18 betätigt wird. Mit diesem Hintergreiforgan 17 arbeitet ein nicht dargestelltes Hintergreiforgan an den Gabelkopfschenkeln 9 zusammen.

Die Bride 3 wird am Holm 2 des Fahrzeugrahmens mittels zweier Schrauben 19 befestigt, und zwar in einer solchen Höhe des Zweirad-Fahrzeuges, die der Höhe des Ständers 1 bis zu seinen Bohrungen 8 entspricht. Wenn das Zweirad-Fahrzeug abgeschlossen werden soll, so fährt man mit dem Zweirad-Fahrzeug so weit zum Ständer 1, bis das Lagerauge 4 im Gabelkopf 7 liegt, wie es aus Figur 2 ersichtlich ist. Nunmehr fluchten die Bohrungen 8 und 10 miteinander und in Figur 1 kann der Schlosszylinder 16 in den Gabelkopf 7 eingesetzt werden, so dass das Zweirad-Fahrzeug am Ständer 1 abgestellt und mit dem Ständer 1 verriegelt worden ist.

Beim Beispiel nach Figur 2 wird ein anderes Schloss verwendet, und zwar ein Langbügelschloss mit dem Bügel 20. Anstelle des Schlosszylinders 16 wird ein Schenkel des Bügels 20 durch die fluchtenden Bohrungen 8 und 10 gesteckt. Dieses Langbügelschloss wird wiederum mit dem Schlüssel 18 betätigt.

## Patentansprüche

1. Abschliessvorrichtung für Zweirad-Fahrzeuge, gekennzeichnet durch einen ortsfest zu montierenden Ständer (1) und eine am Rahmen (2) des Zweirad-Fahrzeuges zu befestigen bestimmte Bride (3) mit Lagerauge (4) zum gegenseitigen Ineinanderfügen von Ständer (1) und Lagerauge (4), wobei der Ständer (1) und das Lagerauge (4) je mit Bohrungen (8, 10) versehen sind, die im zusammengefügten Zustand miteinander fluchten, zum Einsetzen eines Schlosses (16 oder 20).

2. Vorrichtung nach Anspruch 1, dadurch gekennzeichnet, dass der Ständer (1) unten eine Bodenplatte (5) mit Befestigungsorganen (6) und oben einen Gabelkopf (7) mit einander fluchtenden Bohrungen (8) in seinen gegabelten Schenkeln (9) aufweist, die dazu bestimmt sind, das Lagerauge (4) der Bride (3) so zwischen sich aufzunehmen, dass seine Bohrung (10) mit den Bohrungen (8) des Gabelkopfes (8) fluchtet.

3. Vorrichtung nach Anspruch 1 oder 2, dadurch gekennzeichnet, dass die Bride (3) zwei Halbschalen (11, 12) mit daran vorhandenen Lageraugenteilen (13, 14) umfasst, die zusammen die Bohrung (10) aufweisen, und dass die zwei Halbschalen (13, 14) einander formschlüssig (15) hintergreifen.

4. Vorrichtung nach einem der Ansprüche 1-3, dadurch gekennzeichnet, dass die Bohrungen (8) im Gabelkopf (7) als Durchgangsbohrungen ausgebildet sind.

5. Vorrichtung nach einem der Ansprüche 1-4, dadurch gekennzeichnet, dass die Bohrungen (8) im Gabelkopf (7) zum Einsetzen eines Schlosszylinders (16) ausgebildet sind, mit Hintergreiforganen an den Gabelkopfschenkeln (9) für den Schlosszylinder (16).
